Europäisches Patentamt

European Patent Office

Office européen des brevets

(19)

(11) Veröffentlichungsnummer : **0 390 787 B1**

(12) ## EUROPÄISCHE PATENTSCHRIFT

(45) Veröffentlichungstag der Patentschrift :
17.06.92 Patentblatt 92/25

(51) Int. Cl.$^5$ : **B60G 9/02**

(21) Anmeldenummer : **88909091.6**

(22) Anmeldetag : **12.10.88**

(86) Internationale Anmeldenummer :
**PCT/EP88/00913**

(87) Internationale Veröffentlichungsnummer :
**WO 89/05742 29.06.89 Gazette 89/14**

(54) **LAND- ODER BAUWIRTSCHAFTLICH NUTZBARER SCHLEPPER MIT EINER LENKBAREN STARRACHSE.**

(30) Priorität : **17.12.87 DE 3742774**

(43) Veröffentlichungstag der Anmeldung :
**10.10.90 Patentblatt 90/41**

(45) Bekanntmachung des Hinweises auf die
Patenterteilung :
**17.06.92 Patentblatt 92/25**

(84) Benannte Vertragsstaaten :
**DE FR GB IT SE**

(56) Entgegenhaltungen :
**DE-A- 3 523 111
DE-C- 907 254**

(56) Entgegenhaltungen :
**FR-A- 1 171 745
FR-A- 2 570 029
GB-A- 145 618
GB-A- 541 220
GB-A- 979 451
NL-A- 8 602 797
US-A- 1 899 240
US-A- 4 063 361**

(73) Patentinhaber : **ZF FRIEDRICHSHAFEN
Aktiengesellschaft
Löwentaler Strasse 100 Postfach 2520
W-7990 Friedrichshafen 1 (DE)**

(72) Erfinder : **HAUPT, Josef
Motharistrasse 5
W-7991 Oberteuringen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung bezieht sich auf einen land- oder bauwirtschaftlich nutzbaren Schlepper mit einer als Starrachse ausgebildeten Vorderachse, die über eine Gelenkwelle angetrieben wird und deren Achskörper im Bereich seiner Quermittelebene über einen in Schlepperlängsrichtung verlaufenden Tragzapfen in einem ein Kugelgelenk aufweisendes Pendellager eines Querlenkers geführt ist, wobei der Querlenker mit horizontalem Abstand zum Pendellager über ein Kugelgelenk in einer fahrgestellfesten Stützstrebe schwenkbar gelagert und in seiner Schwenkbewegung gegenüber dem Fahrgestell mittels eines Feder-Dämpfer-Elements abgefedert ist, während der Achskörper ebenfalls im Bereich seiner Quermittelebene, dem Tragzapfen gegenüberliegend, starr mit einem im wesentlichen horizontal verlaufenden Lenker verbunden ist, der am Fahrgestell des Schleppers frei drehbar geführt ist. Ein land- oder bauwirtschaftlich nutzbarer Schlepper mit einer als Starrachse ausgebildeten Vorderachse der vorgenannten Gattung ist bekannt aus der US-A 40 63 361. Es handelt sich dabei um ein knickgelenktes Fahrzeug, bestehend aus einem einachsigen Schlepper und einer auf diesen aufgesattelten Baumaschine. Die Starrachse des Schleppers ist nicht lenkbar ausgebildet und über einen in Fahrtrichtung verlaufenden Zuglenker an einem Getriebegehäuse geführt. Besteht der Wunsch, die Starrachse als lenkbare Vorderachse auszubilden, so behindert dieser Zuglenker die Antriebsräder der Achse bei ihrem Lenkeinschlag. Die Gelenkwelle, die zum Antrieb der Starrachse dient, verläuft ungeschützt unterhalb des Zuglenkers, wodurch beim überfahren von Hindernissen Beschädigungen an der Gelenkwelle auftreten können und die Gelenkwelle stark verschmutzt. An der Rückseite der Starrachse ist der Querlenker angeordnet, zu dessen federnder Abstützung das Feder-Dämpfer-Element im Bereich des Tragzapfens am Querlenker angreift und andererseits in einem Rahmenelement befestigt ist. Da es sich dabei um eine starre Anlenkung am Rahmen und am Querlenker handelt, tritt bei Ein- und Ausfederbewegungen des Querlenkers Zwang am Feder-Dämpfer-Element auf. Insgesamt eignet sich eine derartige Anordnung einer Achse mit einem Zuglenker und einem in Fahrtrichtung gesehen der Achse nachgeordneten Querlenker nicht für eine Anordnung einer lenkbaren Vorderachse in einem Vorderachsbock eines Standardschleppers.

Der vorliegenden Erfindung liegt daher die Aufgabe zugrunde, die vorgenannten Schwierigkeiten zu vermeiden und somit eine lenkbare Starrachse an einem land- oder bauwirtschaftlichen Schlepper unter Verwendung von Mitteln federnd aufzuhängen, wobei eine raumsparende und kostengünstige Lösung für einen weiten Anwendungsbereich realisierbar sein soll, bei der Zwang an den Federungselementen und Verschleiß an den Antriebselementen vermieden werden soll.

Diese Aufgabe wird nach dem kennzeichnenden Teil des Anspruchs 1 erfindungsgemäß. dadurch gelöst, daß. die Vorderachse lenkbar ist und der Querlenker dem Achskörper in Fahrtrichtung gesehen vorgelagert ist, wobei das in vertikaler Richtung verlaufende Feder-Dämpfer-Element über ein Kugelgelenk unmittelbar an einem über das Pendellager hinaus verlängerten Hebelarm des Querlenkers angreift und andererseits an einem Vorderachsbock des Schleppers abgestützt ist, daß. der Lenker als rohrförmiger, im Bereich der vertikalen Längsmittelebene des Schleppers verlaufender Schublenker ausgebildet ist, und daß die Gelenkwelle innerhalb des rohrförmigen Schublenkers angeordnet und starr mit einem innerhalb des Achskörpers angeordneten Differentialgetriebe verbunden ist. Das Pendellager wird in vorteilhafter Weise mittele des der Starrachse vorgelagerten Querlenkers in Richtung der Schlepperhochachse geführt, so daß der Seitenversatz in der Aufhängung des Achskörpers während des Ein- und Ausfederns des Feder-Dämpfer-Elements gering gehalten werden kann. Die Folge davon ist ein guter Geradeauslauf der Starrachse. An ihrer Rückseite ist die Starrachse über den Schublenker geführt, der aufgrund seiner Lagerung am Fahrgestell mittels eines Kugelgelenks Ein- und Ausfederbewegungen der Starrachse zuläßt. Dieser Schublenker dient mit seiner Führung im Kugelgelenk als Brems- und Anfahrnickabstützung der Starrachse. Der Schublenker bewirkt weiterhin aufgrund seiner zentrischen Anordnung eine optimale Längskraftabstützung des Achskörpers, die insbesondere bei einseitig wirkenden Stößen, wie sie zum Beispiel beim Überfahren von Hindernissen mit nur einem Rad auftreten, eine wesentliche Rolle spielt. Durch die strikte Trennung von Längs- und Querabstützung kann der die Querabstützung bewirkende Querlenker in einem Freiraum des Schleppers, der der Vorderachse vorgelagert ist, angeordnet werden. Es bestehen daher auch Variationsmöglichkeiten bei der Festlegung der Höhenlage des Querlenkers. Mit einem am Fahrgestell relativ hoch angeordneten Querlenker, der dann an einem oberhalb der Quermittellinie des Achskörpers angeordneten Tragzapfen (übermittige Pendelung des Achskörpers) angreift, ist eine günstige hohe Lage des Momentanpols realisierbar. Das Kugelgelenk zwischen dem Querlenker und dem Federdämpferelement läßt beim Ein- und Ausfedern Relativbewegungen der gegenüber dem Fahrgestell über den Schublenker geführten Achse zu. Die als Kugelgelenk ausgebildete Führung ist geringem Verschleiß ausgesetzt und führt die Achse bei geringer Reibung sehr exakt.

Da das Feder-Dämpfer-Element an einem über das Pendellager hinaus verlängerten Hebelarm des Querlenkers angreift, sind die Wege beim Ein- und Ausfedern der Achse am Feder-Dämpfer-Element größer als an der Achse, wodurch sich der Wirkungsgrad des Dämpfers verbessern läßt. Außerdem ist das Feder-Dämpfer-Element dadurch außerhalb der Schleppermittelachse angeordnet und behindert nicht den Anbau von Geraten an eine, insbesondere bei landwirtschaftlichen Schleppern vorhandene Frontzapfwelle.

Der rohrförmig ausgebildete Schublenker beansprucht aufgrund seiner kompakten Bauweise wenig Raum und läßt daher große Lenkeinschläge der Radachse zu, bei denen aufgrund der Achsgeometrie (Spreizung und nachlauf) die gelenkten Räder abschnittsweise bis unter das Fahrgestell des Schleppers geführt werden. Die Gelenkwelle, die innerhalb des rohrförmigen Schublenkers angeordnet ist, benötigt bei mittiger starrer Verbindung des Schublenkers mit dem Achskörper nunmehr nur noch ein Gelenk, nämlich im Bereich der gelenkigen Befestigung des Schublenkers am Fahrgestell. Der Antrieb der Lenkachse kann daher erheblich einfacher und kostengünstiger gestaltet werden. Außerdem ist die Gelenkwelle geschützt vor Beschädigungen und Verschmutzung und es können sich keine Halme an derselben aufwickeln.

Aus der GB-PS 145 618 ist eine gefederte Vorderachse eines Kraftfahrzeugs bekannt, wobei ein zur pendelnden Lagerung der Starrachse dienendes Tragelement über Blattfederpakete gegenüber dem Fahrgestellrahmen federnd abgestützt ist. An der Rückseite der Starrachse greift ein als dreieckiger Rahmen ausgebildeter Schublenker an. Eine Gelenkwelle ist ungeschützt im Bereich des Schublenkers angeordnet.

Aus der DE-PS 907 254 ist eine gefederte starre Vorderachse bekannt, die über einen Schublenker am Fahrgestell geführt wird. Der starre Achskörper ist dabei aber über beidseitig der Längsmittelachse des Fahrzeugs angeordnete Schraubenfedern am Fahrgestell abgestützt. Achspendelungen zur Anpassung an Bodenunebenheiten sind daher nicht möglich.

Weitere Ausgestaltungen der Erfindung sind in den Unteransprüchen 2 bis 4 beschrieben. In vorteilhafter Weise kann gemäß Anspruch 2 der als Rohr ausgebildete Schublenker längenveränderlich ausgebildet sein, so daß innerhalb einer Achsenbaureihe ein Schublenker für unterschiedliche Radstände von Schleppern vorgesehen sein kann. Zu diesem Zweck kann der Schublenker beispielsweise aus zwei teleskopartig verstellbaren Rohrabschnitten hergestellt werden.

Weiterhin kann gemäß Anspruch 3 das Feder-Dämpfer-Element, das entweder eine Schraubenfeder, eine hydropneumatische oder pneumatische Feder aufweist, blockierbar ausgebildet sein. Eine derartige Federblockierung beeinträchtigt nicht die Pendelfähigkeit des als Waagebalken ausgebildeten Achskörpers und ist beispielsweise dann an Ackerschleppern vorzusehen, wenn durch das Ein- oder Ausfedern der Lenkachse Auswirkungen auf das Regelverhalten eines Krafthebers zu erwarten sind. Da die Federung über nur ein Feder-Dämpfer-Element verfügt, können in einfacher Weise mechanische oder hydraulische Blockiereinrichtungen vorgesehen werden,

Zur weiteren Erläuterung der Erfindung wird auf die Zeichnung verwiesen, in der ein Ausführungsbeispiel vereinfacht dargestellt ist. Es zeigen:

Fig. 1 einen landwirtschaftlichen Schlepper in Seitenansicht mit durch die Längsmittelebene verlaufenden Teilschnitten durch eine als Starrachse ausgebildete Vorderachse und ein fahrgestellseitiges Gelenk eines Schublenkers,

Fig. 2 eine Vorderansicht des Schleppers gemäß Fig. 1 mit einem Teilschnitt im Bereich der Federung der Starrachse,

Fig. 3 eine Ansicht III des Schleppers nach den Fig. 1 und 2 auf die Unterseite seines Fahrgestells und

Fig. 4 einen vergrößerten Ausschnitt IV der Darstellung des Schleppers nach Fig. 3 im Bereich seiner federnden Aufhängung der Starrachse.

Fig. 5 eine Ansicht auf die Unterseite des Fahrgestells eines Schleppers, bei welchem ein Schublenker gabelförmïg ausgebildet ist.

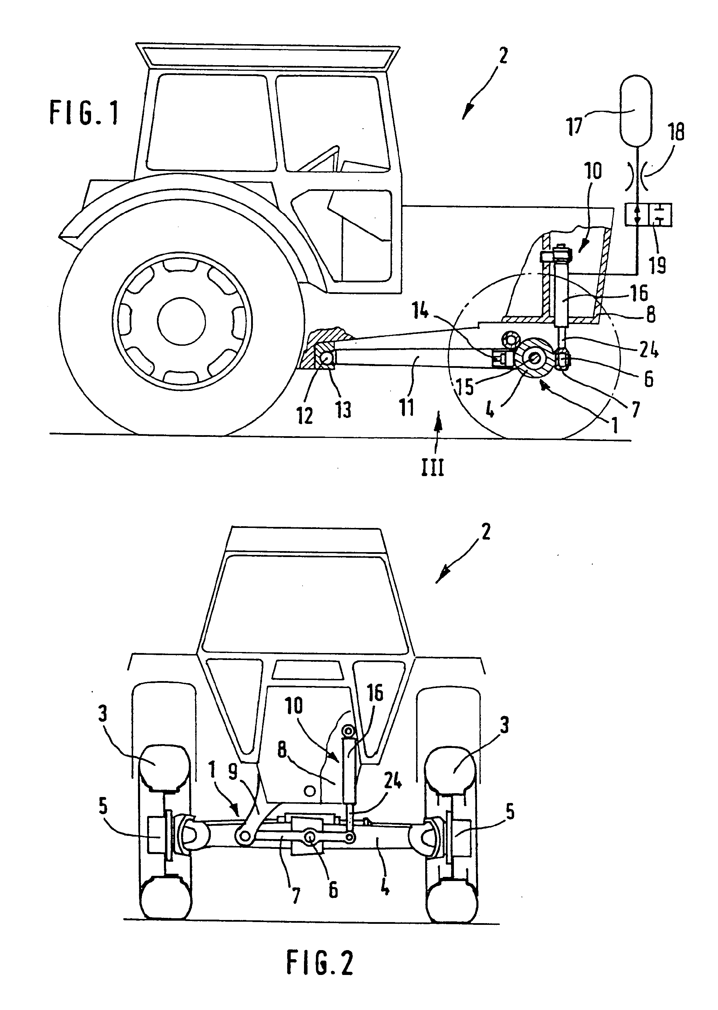

In den Fig. 1 bis 3 und 5 ist, soweit dargestellt, mit 1 eine Starrachse bezeichnet, die als lenkbare Vorderachse eines Schleppers 2 dient und Vorderräder 3 über gelenkig an einem starren Achskörper 4 angeordnete Radköpfe 5 aufnimmt. Der Achskörper 4 ist wie ein Waagebalken im Bereich seiner Quermittelebene über einen in Schlepperlängsrichtung verlaufenden vorderen Tragzapfen 6 in einem Querlenker 7 pendelnd aufgehangen. An einem als Fahrgestell-Element dienenden Vorderachsbock 8 ist dieser Querlenker 7 mit bestand zu seiner Aufnahme des Tragzapfens 6 schwenkbar über eine Stützstrebe 9 angeordnet. An das andere Endes des Querlenkers 7 greift ein Feder-Dämpfer-Element 10 an, das ebenfalls am Vorderachslagerbock 8 befestigt ist.

Der Achskörper 4 ist gemäß den Fig. 1 bis 3 an seiner Rückseite starr mit einem rohrförmigen Schublenker 11 verbunden, der koaxial zum Tragzapfen 6 verläuft und über ein Kugelgelenk 12 frei drehbar an einem an der Unterseite des Schleppers angeordneten Lagerbock 13 geführt ist. Die Vorderräder 3 der Starrachse 1 sind über eine innerhalb des rohrförmig ausgebildeten Schublenkers 11 angeordnete Gelenkwelle 14 von einem nicht näher dargestellten Verteilergetriebe im Bereich des Lagerbockes 13 aus antreibbar, und zwar weiterhin über ein ebenfalls nicht dargestelltes, innerhalb des Achskörpers 4 angeordnetes Differentialgetriebe und Antriebswellen 15.

Das Feder-Dämpfer-Element 10 besteht aus einem Hydraulikzylinder 16, der gegenüber einem Hydraulikspeicher 17 abgefedert ist (vgl. Fig. 1). Als Dämpfer-Element dient eine innerhalb der Verbindung von Hydraulikzylinder 16 und Hydraulikspeicher 17 angeordnete Drossel 18. Weiterhin ist in dieser Verbindung ein 2/2-Wegeventil 19 angeordnet, das in einer Stellung für eine Blockierung des Feder-Dämpfer-Elementes 10 sorgt, indem es den Zu- bzw. belauf des Hydraulikzylinders 16 absperrt.

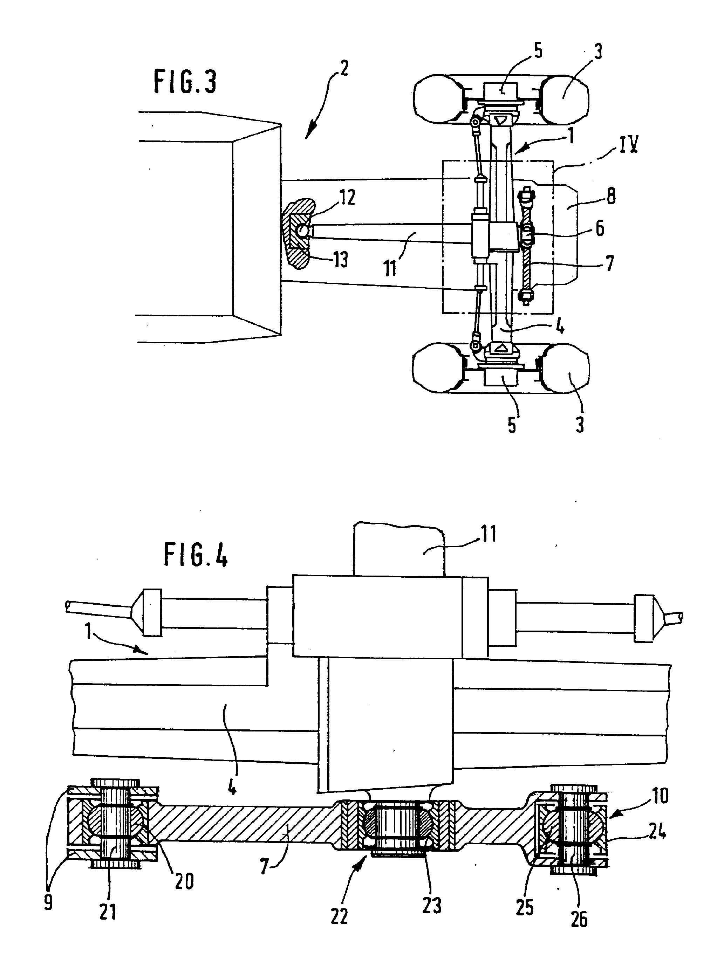

Der Fig. 4 ist deutlicher die Anordnung des Querlenkers 7 an der Stützstrebe 9, dem Tragzapfen 6 und dem Feder-Dämpfer-Element 10 zu entnehmen. Danach nimmt der Querlenker 7 ein Kugelgelenk 20 auf, über welche der Querlenker 7 auf einem in der gabelförmig ausgebildeten Stützstrebe 9 angeordneten Lagerbolzen 21 schwenkbar befestigt ist. Der Tragzapfen 6 ist in einem Pendellager 22 angeordnet, das ebenfalls ein Kugelgelenk 23 aufweist. Eine Kolbenstange 24 des als Feder-Dämpfer-Elementes 10 dienenden Hydraulikzylinders 16 nimmt an ihrem Ende schließlich ein Kugelgelenk 25 und einen Lagerbolzen 26 auf, über welche eine gelenkige Verbindung zwischen dem Querlenker 7 und dem Feder-Dämpfer-Element 10 hergestellt ist.

Die Funktion der dargestellten Anordnung ist folgende: Die Starrachse 1 kann aufgrund ihrer mittigen Lagerung über den Tragzapfen 6 im Querlenker 7 und über das Kugelgelenk 12 des Schublenkers 11 am Lagerbock 13 waagebalkenartige Pendelbewegungen vollführen und ermöglicht es somit den Vorderrädern 3, Unebenheiten des Geländes zu folgen. Die Erhaltung dieser Pendelfähigkeit der Starrachse 1 ist bei land- oder bauwirtschaftlich nutzbaren Schleppern wesentliche Voraussetzung für die Geländetauglichkeit der Achsaufhängung. Über den am Tragzapfen angreifenden Querlenker 7 ist die Starrachse gegenüber dem Vorderachslagerbock über das Feder-Dämpfer-Element 10 abgefedert, wobei der Querlenker 7 gleichzeitig für eine Seiten- und Hochkraftabstützung der Starrachse 1 sorgt. Zur Aufnahme von Längskräften sowie der von den Vorderrädern 3 auf die Starrachse 1 übertragenen Anfahr- und Bremsmomente dient der Schublenker 11. Da sowohl der Querlenker 7 als auch der Schublenker 11 metallische Lagerungen in Form des im Lagerbock 13 angeordneten Kugelgelenks 12 sowie des Pendellagers 22 und der Kugelgelenke 20, 23, 25 aufweisen, kann eine exakte verschleißfreie Führung der Achse mit großer Lebendauer geschaffen werden. Die Gelenkwelle 14 ist geschützt innerhalb des rohrförmigen Schublenkers angeordnet und benötigt in vorteilhafter Weise nur ein Antriebsgelenk im Bereich des Kugelgelenks 12, an welchem nur geringe Beugewinkel auftreten. Insgesamt ergibt sich somit eine für den rauhen Einsatz an land- oder bauwirtschaftlichen Schleppern geeignete Achsaufhängung mit günstiger Achskinematik und guten Federeigenschaften.

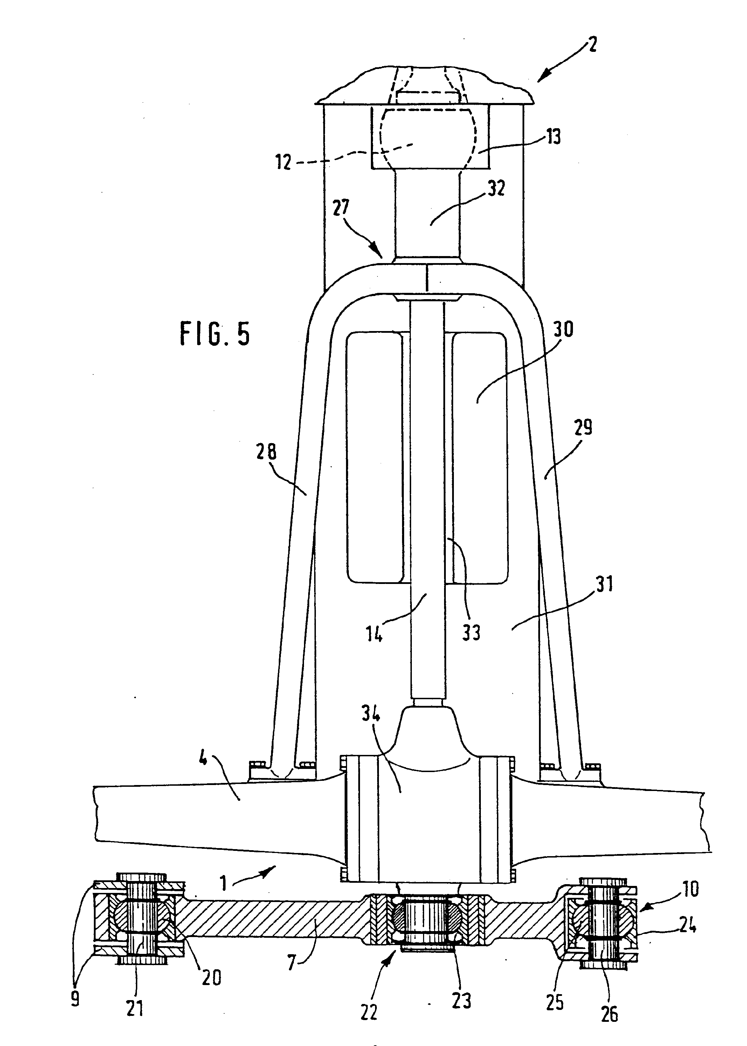

Bei dem Ausgestaltungsbeispiel nach Fig. 5 ist ein Schublenker 27 vorgesehen, der, gabelförmig ausgebildet, Schubstreben 28 und 29 aufweist. Jede dieser Schubstreben 28 und 29 ist seitlich an einer Ölwanne 30 einer Brennkraftmaschine 31 des Schleppers vorbeigeführt und starr mit dem Achskörper 4 verbunden. An diesen aus den beiden Schubstreben 28 und 29 bestehenden Abschnitt des Schublenkers 27 schließt sich ein rohrförmiger Abschnitt 32 des Schublenkers 27 an, der schließlich in dem Kugelgelenk 12 endet, das von dem fahrgestellseitigen Lagerbock 13 aufgenommen ist. Durch diesen rohrförmigen Abschnitt 32 hindurch ist die Gelenkwelle 14 geführt, die sich weiter durch eine tunnelartige Vertiefung 33 der Ölwanne 30 bis hin zum starren Anschluß an ein mittiges Differentialgetriebegehäuse 34 der Starrachse 1 erstreckt.

Die Verwendung eines gabelförmig ausgebildeten Schublenkers 27 weist den Vorteil auf, daß der Freiraum für die Ölwanne 30 der Brennkraftmaschine 31 nicht beeinträchtigt ist. Es muß nur die bezüglich ihres Durchmessers kleiner dimensionierte Gelenkwelle durch die tunnelartige Vertiefung 33 der Ölwanne 30 geführt werden. Mittels der beiden Schubstreben 28 und 29 ist eine besonders steife Längskraftabstützung des Achskörpers 4 zu verwirklichen.

## Patentansprüche

1. Land- oder bauwirtschaftlich nutzbarer Schlepper mit einer als Starrachse (1) ausgebildeten Vorderachse, die über eine Gelenkwelle (14) angetrieben wird und deren Achskörper (4) im Bereich seiner Quermittelebene über einen in Schlepperlängsrichtung verlaufender Tragzapfen (6) in einem ein Kugelgelenk (23) aufweisenden Pendellager (22) eines Querlenkers (7) geführt ist, wobei der Querlenker (7) mit horizontalem Abstand zum Pendellager (22) über ein Kugelgelenk (20) in einer fahrgestellfesten Stützstrebe (9) schwenkbar gelagert und in seiner Schwenkbewegung gegenüber dem Fahrgestell mittels eines Feder-Dämpfer-Elements (10) abgefedert ist, während der Achskörper (4) ebenfalls im Bereich seiner Quermittelebene, dem Tragzapfen gegenüberliegend, starr mit einem im wesentlichen horizontal verlaufenden Lenker verbunden ist, der am Fahrgestell (8) des Schleppers über ein Kugelgelenk (12) frei drehbar geführt ist, dadurch **gekennzeichnet** , daß die Vorderachse (1) lenkbar ist und der Querlenker (7) dem Achskörper (4) in Fahrtrichtung gesehen vorgelagert ist, wobei das in vertikaler Richtung verlaufende Feder-Dämpfer-Element (10) über ein Kugelgelenk (25) unmittelbar an einem über das Pendellager (22) hinaus verlängerten Hebelarm des Querlenkers (7) angreift und andererseits an einem Vorderachsbock (8) des Schleppers abgestützt ist, daß. der Lenker als rohrförmiger, im Bereich der vertikalen Längsmittelebene des Schleppers verlaufender Schublenker (11) ausgebildet ist und daß die Gelenkwelle (14) innerhalb des rohrförmigen Schublenkers (11) angeordnet und starr

EP 0 390 787 B1

mit einem innerhalb des Achskörpers (4) angeordneten Differentialgetriebe verbunden ist.

2. Land- oder bauwirtschaftlich nutzbarer Schlepper nach Anspruch 1, dadurch **gekennzeichnet**, daß der Schublenker (11) längenveränderlich ausgebildet ist.

3. Land- oder bauwirtschaftlich nutzbarer Schlepper nach Anspruch 1, dadurch **gekennzeichnet**, daß das Feder-Dämpfer-Element (10) eine Schraubenfeder aufweist, die mechanioch blockierbar ist.

4. Land- oder bauwirtschaftlich nutzbarer Schlepper nach Anspruch 1, dadurch **gekennzeichnet**, daß das Feder-Dämpfer-Element (10) als hydro-pneumatische Federung mit einem an einen Hydraulikspeicher (17) angeschlossenen Hydraulikzylinder (16) ausgebildet ist, die mittels eines 2/2-Wegeventils (19) durch Absperrung der Verbindung zwischen Hydraulikzylinder (16) und Hydraulikspeicher (17) blockierbar ist.

## Claims

1. Tractor which can be used for agricultural or building purposes, comprising a front axle which is formed as a rigid axle (1), is driven via a universally jointed shaft (14) and the axle beam (4) of which is guided in the area of its transverse central plane in a swivel bearing (22), which comprises a ball-and-socket joint (23), of a transverse control arm (7) via a pivot (6), which extends in the longitudinal direction of the tractor, the transverse control arm (7) being pivotably mounted in a support arm (9), which is rigid with the chassis, via a ball-and-socket joint (20) at a horizontal spacing from the swivel bearing (22) and being cushioned in its pivotal movement with respect to the chassis by means of a spring damper element (10), while the axle beam (4) is also rigidly connected to an essentially horizontal link in the area of its transverse central plane, opposite the pivot, which link can be freely rotated at the chassis (8) of the tractor via a ball-and-socket joint (12), characterised in that the front axle (1) is steerable and the transverse control arm (7) is mounted in front of the axle beam (4) in the direction of travel, the spring damper element (10), which extends in the vertical direction, acting directly on a lever arm, which is extended beyond the swivel bearing (22), of the transverse control arm (7) via a ball-and-socket joint (25) and being supported at the other side on a front axle support frame (8) of the tractor, that the link is formed as a tubular thrust link (11), which extends in the area of the vertical longitudinal central plane of the tractor, and that the universally jointed shaft (14) is arranged inside the tubular thrust link (11) and is rigidly connected to a differential gear unit, which is arranged inside the axle beam (4).

2. Tractor which can be used for agricultural or building purposes according to claim 1, characterised in that the thrust link (11) is formed such that its length can be varied.

3. Tractor which can be used for agricultural or building purposes according to claim 1, characterised in that the spring damper element (10) comprises a helical spring which can be mechanically locked.

4. Tractor which can be used for agricultural or building purposes according to claim 1, characterised in that the spring damper element (10) is formed as a hydropneumatic spring suspension with a hydraulic cylinder (16), which is connected to a hydraulic reservoir (17), which spring suspension can be locked by means of a 2/2 way valve (19) by shutting off the connection between the hydraulic cylinder (16) and the hydraulic reservoir (17).

## Revendications

1. Tracteur utilisable dans l'agriculture ou le génie civil, comportant un essieu avant formé par un essieu rigide (1) qui est entraîné au moyen d'un arbre articulé (14) et dont un corps d'essieu (4) est guidé, dans la région de son plan transversal médian, au moyen d'un tourillon (6) disposé dans la direction longitudinale du tracteur et monté dans un palier oscillant (22) à rotule (23) d'un bras transversal (7), ce bras (7) étant monté de manière oscillante sur une jambe de force (9) solidaire du châssis, au moyen d'un joint de rotule (20) situé à une distance horizontale du palier oscillant (22), et ledit bras (7) étant supporté élastiquement dans son mouvement oscillant par rapport au châssis au moyen d'un élément à ressort et amortisseur (10) , tandis que le corps d'essieu (4) , également dans la région de son plan transversal médian et du côté opposé au tourillon, est lié rigidement à un bras longitudinal sensiblement horizontal qui est monté sur le châssis (8) du tracteur de manière librement rotative au moyen d'un joint à rotule (12), **caractérisé** en ce que l'essieu avant (1) est directeur, en ce que le bras transversal (7) est placé devant le corps d'essieu (4) par rapport au sens de marche, en ce que l'élément à ressort et amortisseur (10), disposé en direction verticale, attaque directement le bras transversal (7) par un joint à rotule (25) sur un bras de levier formé par un prolongement du bras transversal au-delà du palier oscillant (22) et s'appuie d'autre part dans un porte-à-faux avant (8) du tracteur, en ce que le bras longitudinal est formé par un bras tubulaire de poussée (11) situé à proximité du plan vertical longitudinal médian du tracteur, et en ce que l'arbre articulé (14) est disposé à l'intérieur du bras tubulaire de poussée (11)

5

et est raccordé rigidement à un différentiel disposé à l'intérieur du corps d'essieu (4).

2. Tracteur selon la revendication 1, **caractérisé** en ce que le bras de poussée (11) est agencé pour avoir une longueur variable.

3. Tracteur selon la revendication 1, **caractérisé** en ce que l'élément à ressort et amortisseur (10) comporte un ressort hélicoïdal qui peut être bloqué mécaniquement.

4. Tracteur selon la revendication 1, **caractérisé** en ce que l'élément à ressort et amortisseur (10) est formé par un élément de suspension hydropneumatique comportant un cylindre hydraulique (16) raccordé à un accumulateur hydraulique (17) et verrouillable par blocage de la liaison entre le cylindre (16) et l'accumulateur (17) au moyen d'un distributeur 2/2 (19).

FIG.1

FIG.2

FIG.3

FIG.4

FIG. 5